# EUROPÄISCHE PATENTSCHRIFT

(11) **EP 0 971 206 B1**
(45) Veröffentlichungstag und Bekanntmachung des Hinweises auf die Patenterteilung: **03.04.2002**
(21) Anmeldenummer: 99111472.9
(22) Anmeldetag: 12.06.1999
(51) Int. Cl.: G01C 9/32

(54) **Wasserwaage**
SPIRIT LEVEL
NIVEAU A BULLE

(30) Priorität: 06.07.1998 AT 116998
(43) Veröffentlichungstag der Anmeldung: 12.01.2000
(73) Patentinhaber: Ing. Guido Scheyer SOLA-Messwerkzeuge, Gesellschaft m.b.H. & Co., A-6840 Götzis (AT)
(72) Erfinder: Scheyer, Dietmar, 6840 Götzis (AT)
(74) Vertreter: Hefel, Herbert, Dipl.-Ing.

(56) Entgegenhaltungen:
- EP-A- 0 656 524
- WO-A-95/27417
- US-A- 5 361 503

## Beschreibung

Die Erfindung bezieht sich auf eine Wasserwaage mit mindestens einem scheiben- oder quaderförmigen Libellenkörper aus durchsichtigem Material mit einer flüssigkeitsgefüllten Libellenbohrung, wobei der Libellenkörper von einem in oder an einem Wasserwaagenkörper festgelegten Halter aufgenommen ist und dem Libellenkörper mindestens eine Lichtquelle zugeordnet ist und die zum Betrieb der Lichtquelle vorgesehene Energiequelle und gegebenenfalls Schaltung in dem wenigstens über einen Teil seiner Länge als Hohlprofil ausgebildeten Wasserwaagenkörper angeordnet ist.

Wasserwaagen mit beleuchteten Libellen sind in vielen Formen und Ausführungen bekannt geworden. Ohne Anspruch auf Vollständigkeit werden nachstehend Veröffentlichungen aufgelistet, die Wasserwaagen dieser Art zeigen und beschreiben: DE 40 08 039 A1; DE 41 29 861 A1; DE 39 01 910 A1; DE 92 01 413.5 U1; DE 91 11 144.7 U1; DE 87 02 484.5 U1; DE 79 32 115 U1; DE 80 24 105 U1; DE 87 08 923.8 U1; DE 84 16 291.0 U1; DE 78 36 405 U1; DE 79 03 570 U1; EP 0 381 373 A1; EP 0 656 524 A1 und US 4 103 430 A. Bei diesen bekannten Konstruktionen sind den einzelnen Libellen kleine Glühlampen oder Leuchtdioden beigefügt, bei anderen bekannten Konstruktionen dieser Art ist im Wasserwaagenkörper jeweils eine einzige Glühlampe vorgesehen und von dieser einzelnen Glühlampe aus führen Lichtleitfaserbündel zu den einzelnen Libellen. Am Wasserwaagenkörper ist dann noch ein Schalter vorgesehen, mit dem die Energiequelle, die sich im Wasserwaagenkörper befindet, zu- bzw. abgeschaltet werden kann. Des weiteren gehört es zum Stand der Technik, einen Teil des Libellenkörpers als getrennten Bauteil zu fertigen und mit einer Beimengung von phosphoreszierenden Substanzen zu versehen. Es handelt sich dabei um den Bodenteil des Libellenkörpers, der nach ausreichender Lichtaktivierung mehr oder weniger nachleuchtet. All diese Konstruktionen sind relativ aufwendig und teuer und haben sich aus diesem Grund auch auf dem einschlägigen Markt nur in beschränktem Umfang durchsetzen können.

Leuchtbänder und Leuchtfolien sind an sich bekannt. So zeigt beispielsweise die US 5 746 501 A ein Uhrarmband für eine Armbanduhr, das mit einer Leuchtfolie bestückt ist, die mit einer Spannungsquelle verbunden ist, wobei diese Leuchtfolie am Uhrarmband ausschließlich dekorativen Charakter hat. Eine andere in diesem Zusammenhang zu nennende Vorveröffentlichung, nämlich die WO 95/27417, zeigt und beschreibt einen Schuh, an welchem solche Leuchtbänder aus Sicherheitsgründen angeordnet sind. In beiden Fällen handelt es sich um Leuchtbänder oder Leuchtfolien, die an eine Energiequelle anschließbar sind. Diese bekannten Leuchtfolien oder Leuchtbänder sind entweder als dekorative Effekte oder als Sicherheitselemente vorgesehen. Bei dem vorstehend erwähnten Schuh dienen sie als Rückstrahler.

Ausgehend von diesem Stand der Technik zielt die Erfindung darauf ab, eine Wasserwaage der gegenständlichen Art dahingehend zu verbessern, daß sie preisgünstig gefertigt werden kann, was vorschlagsgemäß dadurch gelingt, daß als Lichtquelle ein an sich bekanntes Leuchtband vorgesehen ist und das Leuchtband an einer Seitenfläche des Libellenkörpers vorgesehen ist. Zweckmäßige Ausgestaltungen der Erfindung sind in den Unteransprüchen festgehalten.

Ohne die Erfindung einzuschränken, wird ein Ausführungsbeispiel anhand der Zeichnung näher erläutert. Es zeigen:
Fig. 1 eine Wasserwaage mit zwei Libellen in Ansicht, zum Teil aufgerissen;
Fig. 2 den Halter für den scheibenförmigen Libellenkörper in Ansicht und
Fig. 3 einen Detailquerschnitt nach der Linie III - III in Fig. 2;
Fig. 4 den Halter für den quaderförmigen Libellenkörper in Ansicht und
Fig. 5 im Querschnitt gemäß der Schnittlinie V - V in Fig. 4;
Fig. 6 ein Leuchtband in Schrägsicht.
Die einzelnen Abbildungen haben unterschiedliche Maßstäbe.

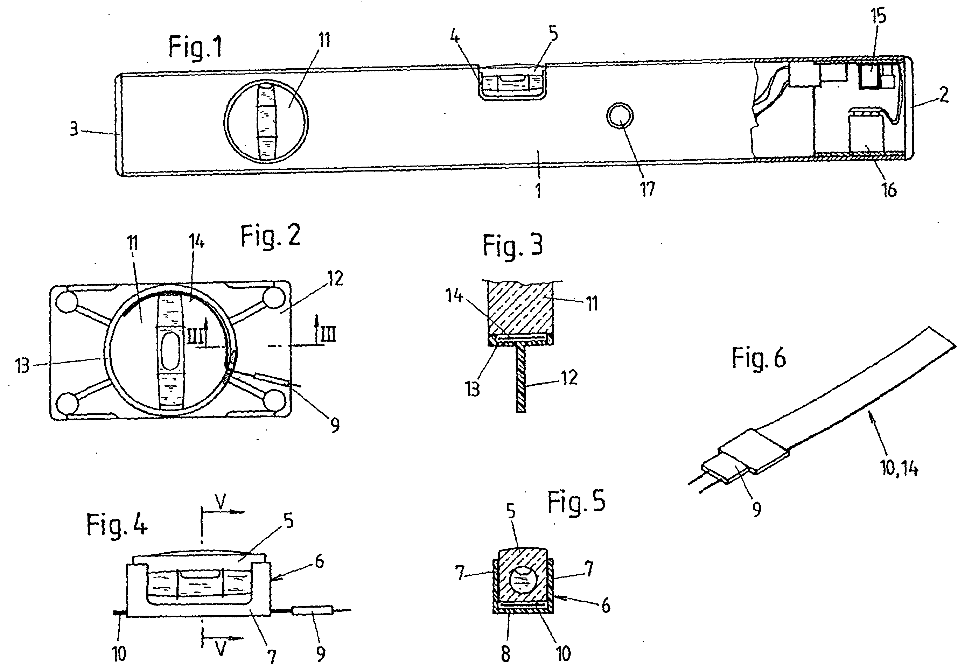

Die Wasserwaage nach Fig. 1 besitzt einen Wasserwaagenkörper 1, der aus einem metallischen Hohlprofil gefertigt ist. Dieses Hohlprofil ist stirnseitig mit Verschlußkappen 2 und 3 verschlossen. Im Mittelbereich des Wasserwaagenkörpers 1 und an seiner Oberseite ist in einem im Hohlprofil festgelegten Halter 4 ein quaderförmiger Libellenkörper 5 mit einer Libellenbohrung angeordnet. Die Libellenbohrung ist mit einer Flüssigkeit gefüllt. Der für Horizontalmessungen vorgesehene quaderförmige Libellenkörper 5 ist in Fig. 4 in vergrößertem Maßstab gezeigt. Der Libellenkörper 5 ist in einem U-förmigen Halter 6 angeordnet mit seitlichen Wangen 7 und einem diese Wangen 7 verbindenden Bodensteg 8. Die Wangen 7 sind seitlich ausgenommen (Fig. 4) und geben dadurch den Blick auf die Libelle frei. Zwischen dem Bodensteg 8 und der Unterseite des quaderförmigen Libellenkörpers 5 ist nun ein Leuchtband 10 angeordnet, das endseitig einen zwei Kontaktstifte aufweisenden Stecker 9 trägt. Ein solches Leuchtband ist in Fig. 6 dargestellt. Das Leuchtband ist flexibel und kann gebogen werden. Solche Leuchtbänder 10, 14 werden im Handel feilgeboten. Sie werden mit einer elektrischen Spannung von 130 - 220 V und einer Frequenz von 50 - 800 Hz betrieben. Solche Leuchtbänder 10, 14 werden mit jeweils gewünschter Länge hergestellt und sind flexibel.

Für vertikale Messungen ist im Wasserwaagenkörper 1 ein scheibenförmiger Libellenkörper 11 vorgesehen. Auch dieser Libellenkörper 11 ist von einem Halter 12 aufgenommen, der im Hohlraum des Wasserwaagenkörpers 1 festgelegt wird. Der den Libellenkörper 11 aufnehmende Ring 13 des Halters 12 besitzt eine inseitige, flache Nut, in der das Leuchtband 14 liegt, das ebenfalls endseitig einen Stecker 9 aufweist. Das biegsame Leuchtband 14 ist so lang bemessen und so angeordnet, daß es sich über einen Bogenwinkel von ca. 180° erstreckt. Es liegt im Rahmen des Möglichen, das Leuchtband 14 um den gesamten Umfang des scheibenförmigen Libellenkörpers 11 zu legen.

Aufgrund der relativ hohen Spannung und der hohen Frequenz, mit der solche Leuchtbänder 10 bzw. 14 betrieben werden, ist ein Vorschaltgerät 15 erforderlich mit einem Wechselrichter und einem Transformator. Ein solches Vorschaltgerät 15 kann mit modernen elektronischen Bauteilen sehr klein gehalten werden, so daß es zusammen mit der als Batterie 16 ausgebildeten Energiequelle in der einen Verschlußkappe 2 des Wasserwaagenkörpers 1 untergebracht werden kann. Die die einzelnen elektronischen Bauteile verbindenden Leitungen sind über Stecker miteinander verbunden und im Bedarfsfall ohne Schwierigkeiten lösbar. Anstelle einer Steckverbindung können auch andere elektrisch leitende Verbindungen vorgesehen sein. Im Wasserwaagenkörper 1 ist auch ein Schalter 17 angeordnet, mit dem die Beleuchtung wahlweise eingeschaltet werden kann. Es liegt im Rahmen der Erfindung, einen solchen Schalter evtl. zu beiden Seiten des mittig liegenden Libellenkörpers 5 vorzusehen und die beiden Schalter parallel zu schalten, so daß die Beleuchtung im Bedarfsfalle sowohl mit der rechten wie auch mit der linken Hand zugeschaltet werden kann. Der Schalter 17 kann auch als einfacher Druckschalter ausgebildet werden und im Vorschaltgerät 15 bzw. in der hier vorhandenen Schaltung kann noch ein Zeitrelais eingebaut werden, das nach Freigabe des Schalters 17 die Spannungsquelle nach einiger Zeit selbsttätig abschaltet. Auch die Verschlußkappe 2 eignet sich zur Anordnung des Schalters 17.

### Legende zu den Hinweisziffern:

- 1: Wasserwaagenkörper
- 2: Verschlußkappe
- 3: Verschlußkappe
- 4: Halter
- 5: quaderförmiger Libellenkörper
- 6: Halter
- 7: Wangen
- 8: Bodensteg
- 9: Stecker
- 10: Leuchtband
- 11: scheibenförmiger Libellenkörper
- 12: Halter
- 13: Ring
- 14: Leuchtband
- 15: Vorschaltgerät
- 16: Batterie
- 17: Druckschalter

## Patentansprüche

1. Wasserwaage mit mindestens einem scheiben- oder quaderförmigen Libellenkörper (5, 11) aus durchsichtigem Material mit einer flüssigkeitsgefüllten Libellenbohrung, wobei der Libellenkörper (5, 11) von einem in oder an einem Wasserwaagenkörper (1) festgelegten Halter (4, 12) aufgenommen ist und dem Libellenkörper (5, 11) mindestens eine Lichtquelle zugeordnet ist und die zum Betrieb der Lichtquelle vorgesehene Energiequelle und gegebenenfalls Schaltung in dem wenigstens über einen Teil seiner Länge als Hohlprofil ausgebildeten Wasserwaagenkörper (1) angeordnet ist, **dadurch gekennzeichnet, daß** als Lichtquelle ein an sich bekanntes Leuchtband (10, 14) vorgesehen ist und das Leuchtband (10, 14) an einer Seitenfläche des Libellenkörpers (5, 11) vorgesehen ist.

2. Wasserwaage nach Anspruch 1, **dadurch gekennzeichnet, daß** das Leuchtband (10, 14) zwischen Libellenkörper (5, 11) und Halter (6, 12) angeordnet ist.

3. Wasserwaage nach Anspruch 3, **dadurch gekennzeichnet, daß** das Leuchtband (10, 14) in einer im Halter (6, 12) oder im Libellenkörper (5, 11) vorgesehenen flachen Nut liegt.

4. Wasserwaage nach einem der Ansprüche 1 bis 3, **dadurch gekennzeichnet, daß** bei scheibenförmigem Libellenkörper (11) sich das randseitig angeordnete Leuchtband (14) über einen Bogenwinkel von ca. 180° erstreckt.

5. Wasserwaage nach Anspruch 1, **dadurch gekennzeichnet, daß** als Energiequelle in an sich bekannter Weise eine Batterie (16) vorgesehen ist und zwischen Batterie (16) und Leuchtband (10, 14) ein Vorschaltgerät (15) angeordnet ist und daß Batterie (16) und Vorschaltgerät (15) in einer das Hohlprofil des Wasserwaagenkörpers (1) stirnseitig verschließenden Verschlußkappe (2) angeordnet sind.

6. Wasserwaage nach Anspruch 5, **dadurch gekennzeichnet, daß** die die Energiequelle, das Vorschaltgerät und das Leuchtband verbindenden Leitungen mittels Steckverbindern (9) elektrisch leitend verbunden sind.

7. Wasserwaage nach Anspruch 5, **dadurch gekennzeichnet, daß** die Schaltung ein Zeitrelais aufweist.

8. Wasserwaage nach einem der Ansprüche 1 bis 7, **dadurch gekennzeichnet, daß** die Seitenfläche des Libellenkörpers (5, 11), an der das Leuchtband (10, 14) anliegt, innerhalb des Wasserwaagenkörpers (1) vorgesehen ist.

## Claims

1. A spirit level with at least one disc-shaped or cuboidal bubble tube (5, 11) comprising a transparent material with a liquid-filled bubble bore, wherein the bubble tube (5, 11) is held by a retainer (4, 12) fixed in or on a spirit level housing (1), and at least one light source is associated with the bubble tube (5, 11), and the energy source and, if applicable, the circuit provided for operation of the light source is arranged in the spirit level housing (1) formed as a hollow section over at least part of its length, **characterised in that** a luminous band (10, 14), known per se, is provided as a light source and the luminous band (10, 14) is provided on one side surface of the bubble tube (5, 11).

2. A spirit level according to claim 1, **characterised in that** the luminous band (10, 14) is arranged between the bubble tube (5, 11) and the retainer (6, 12).

3. A spirit level according to claim 3, **characterised in that** the luminous band (10, 14) lies in a flat groove provided in the retainer (6, 12) or the bubble tube (5, 11).

4. A spirit level according to any one of claims 1 to 3, **characterised in that**, in the disc-shaped bubble tube (11), the luminous band (14) arranged at the edge extends over an arc of approximately 180°.

5. A spirit level according to claim 1, **characterised in that** a battery (16) is provided as an energy source in a known manner and a ballast (15) is arranged between the battery (16) and the luminous band (10, 14), and **in that** the battery (16) and the ballast (15) are arranged in a closure cap (2) closing the end of the hollow section of the spirit level housing (1).

6. A spirit level according to claim 5, **characterised in that** the lines connecting the energy source, the ballast and the luminous band are electrically conductively connected by means of plug connectors (9).

7. A spirit level according to claim 5, **characterised in that** the circuit has a timing relay.

8. A spirit level according to any one of claims 1 to 7, **characterised in that** the side surface of the bubble tube (5, 11) against which the luminous band (10, 14) rests is provided inside the spirit level housing (1).

## Revendications

1. Niveau à bulle d'air comprenant au moins un corps de nivelle (5, 11) en forme de disque ou de parallélépipède et constitué d'un matériau transparent avec un orifice de nivelle rempli d'un liquide, le corps de nivelle (5, 11) étant reçu par un réceptacle (4, 12) fixé dans ou sur un corps de niveau à bulle d'air (1) et au moins une source de lumière étant affectée au corps de nivelle (5, 11) et la source d'énergie prévue pour le fonctionnement de la source de lumière et éventuellement le circuit de commutation étant agencés dans le corps de niveau à bulle d'air (1) conformé en profilé creux au moins sur une partie de sa longueur, **caractérisé en ce qu'**on prévoit comme source de lumière une bande lumineuse (10, 14) connue en soi et que la bande lumineuse (10, 14) est prévue sur une surface latérale du corps de nivelle (5, 11).

2. Niveau à bulle d'air selon la revendication 1, **caractérisé en ce que** la bande lumineuse (10, 14) est agencée entre le corps de nivelle (5, 11) et le réceptacle (6, 12).

3. Niveau à bulle d'air selon la revendication 2, **caractérisé en ce que** la bande lumineuse (10, 14) se situe dans une encoche plate ménagée dans le réceptacle (6, 12) ou dans le corps de nivelle (5, 11).

4. Niveau à bulle d'air selon l'une quelconque des revendications 1 à 3, **caractérisé en ce que**, dans le cas de corps de nivelle en forme de disque (11), la bande lumineuse (14) agencée sur le bord s'étend sur un angle d'arc d'environ 180°.

5. Niveau à bulle d'air selon la revendication 1, **caractérisé en ce qu'**il est prévu comme source d'énergie une batterie (16) de manière connue en soi et, entre la batterie (16) et la bande lumineuse (10, 14), est agencé un appareil de pré-commutation (15), et **en ce que** la batterie (16) et l'appareil de pré-commutation (15) sont agencés dans une coiffe de fermeture fermant côté frontal le profilé creux du corps de niveau à bulle d'air (1).

6. Niveau à bulle d'air selon la revendication 5, **caractérisé en ce que** les lignes connectant la source d'énergie, l'appareil de pré-commutation et la bande lumineuse sont raccordées au moyen de connecteurs enfichables (9) de manière conductrice de l'électricité.

7. Niveau à bulle d'air selon la revendication 5, **caractérisé en ce que** le circuit de commutation présente un relais à retard.

8. Niveau à bulle d'air selon l'une quelconque des revendications 1 à 7, **caractérisé en ce que** la surface latérale du corps de nivelle (5, 11), sur laquelle s'applique la bande lumineuse (10, 14), est prévue à l'intérieur du corps du niveau à bulle d'air (1).
